# EUROPEAN PATENT SPECIFICATION

(11) **EP 0 662 337 B1**
(45) Date of publication and mention of the grant of the patent: **27.08.1997**
(21) Application number: 94119524.0
(22) Date of filing: 09.12.1994
(51) Int. Cl.: B01D 35/01

(54) **Fuel filter with internal vent**
Kraftstofffilter mit integriertem Entlüftungssystem
Filtre pour carburant pourvu d'un système de dégazage intégré

(30) Priority: 13.12.1993 US 166226; 30.09.1994 US 316216
(43) Date of publication of application: 12.07.1995
(73) Proprietor: STANADYNE AUTOMOTIVE CORP., Windsor Connecticut 06095 (US)
(72) Inventor: Janik, Leon P., Suffield, Connecticut 06078 (US); Maxwell, M. Craig, Colchester, Connecticut 06415 (US)
(74) Representative: Glawe, Delfs, Moll & Partner

(56) References cited:
- EP-A- 0 442 365
- EP-A- 0 547 951

## Description

### Background Of The Invention

This invention relates generally to filters for filtering and separating fluids. More particularly, the present invention relates to fuel filters for removing foreign particles and separating water from the fuel of the fuel supply system of an internal combustion engine.

Diesel fuel supplies frequently contain significant quantities of abrasive particles and water which present the potential for permanent damage to the components of the fuel injection pump, the fuel delivery system and the engine. Consequently, an effective fuel filter as a practical necessity is conventionally incorporated into the fuel supply system of a diesel engine. A multitude of conventional fuel filters employ a disposable filter cartridge which is replaced at pre-established intervals of filter usage. Such fuel filters perform the dual function of removing particulate material from the diesel fuel and separating water from the fuel.

U.S. Patent No. 4,976,852 and U.S. Patent No. 5,084,170, which are assigned to the assignee of the present invention, disclose fuel filter assemblies to which the present invention relates. The fuel filters employ a base which mounts a disposable filter cartridge. In some disclosed embodiments, the cartridge includes a single stage filter system wherein fuel flows axially and radially to a filter element for removing particulate matter. The filter element also functions as a water barrier. Filtered fuel flows axially and exits through an outlet passage of the base. The water may be collected in a sump and periodically removed. The cartridge is secured to the base by a collar which engages against a roll seam structure of the cartridge.

For most, if not all diesel fuel delivery systems, as fuel circulates through the fuel filter, air pockets are formed in the fuel filter. The air pockets normally form at the top of the fuel filter. Air bubbles tend to form in the fuel as a result of gassing when the fuel is exposed to changes in pressure. For pressurized fuel delivery systems, the air pockets tend to disintegrate over time and/or the stream of bubbles present in the fuel is of a relatively small magnitude. The air pockets generally do not result in the formation of large air bubbles in the fuel supply partly due to the vapor pressure of the pressurized fuel. Consequently, for pressurized systems, air pockets in the fuel filter do not present a significant problem or obstacle to the circulation of fuel through the fuel filter and the delivery of fuel to the engine.

However, in vacuum applications, the formation of air pockets in the fuel circulating through the filter can present a more significant problem. The air pockets are much more resistant to absorption over time in vacuum systems. Moreover, the vacuum suction exerted may result in the formation of tiny air bubbles or "gassing" in the fuel. This is especially true as the filter element approaches the end of its useful life and the pressure drop across the filter media increases. This increasing restriction to flow causes more air to be pulled from the fuel as the differential pressure between the clear side and the dirty side increases. In of themselves, these individual tiny bubbles do not present a problem to normal vehicle operation as they are easily ingested by the fuel injection pump. When subjected to pump charging pressures, the tiny bubbles are ordinarily reabsorbed by the fuel.

The problems in vacuum suction systems initially arise on the clean side of the filter element where the small bubbles inevitably collect, agglomerate and form air pockets, e.g., large bubbles. The large bubble formation will continue over a period of time until the physical attitude of the filter element changes due to vehicle maneuvering, etc. When these relative large air pockets or bubbles escape into the fuel flow, they are not easily ingested and may cause engine operating problems such as stalling or engine misfire.

EP-A-0547951 discloses a fuel filter cartridge including a housing having axially spaced first and second ends. A first seal is mounted in an axial opening in the first end of the housing. The first seal comprises an elastomeric member defining an axial opening and having an inner surface and an outer surface. A filter element having first and second ends is disposed in the housing and defines a central inner region on one side of the element and an outer region on the opposing side of the element. An endcap is mounted to the filter element second end. A conduit having axially opposite first and second ends is mounted to the endcap such that the conduit is disposed in the filter element inner region. A vent, defining a vent orifice, is disposed in the conduit. EP-A-0547951 does not disclose a fuel filter cartridge which receives and seals to first and second conduits which extend from the filter assembly base. Therefore, the filter cartridge of EP-A-0547951 may not be used in place of the filter cartridge disclosed in EP-A-0442365. EP-A-0442365 discloses a fuel filter cartridge including a housing having axially spaced first and second ends. A first seal is mounted in an axial opening in the first end of the housing. The first seal comprises an elastomeric member defining an axial opening and having an inner surface and an outer surface. A filter element having first and second ends is disposed in the housing and defines a central inner region on one side of the element and an outer region on the opposing side of the element. EP-A-0442365 does not disclose a vent defining a vent orifice. Therefore, a filter cartridge in accordance with EP-A-0442365 will not control air bubble formation to thereby control the accumulation of air in the fuel filter. Nor can the filter system of EP-A-0442365 be combined with the filter cartridge of EP-A-0547951 to provide a filter system which provides such air accumulation control.

The object of the invention is to provide a new and improved fuel filter which employs a disposable cartridge incorporating improved means for controlling the flow rate and size of air bubbles in the fuel supply exiting the filter.

### Summary Of The Invention

Briefly stated, the invention in a preferred form is a fuel filter assembly which incorporates a filter cartridge having an internal vent to control air bubble formation and its adverse effects. The invention implements a controlled bleed path within the filter cartridge to meter the stream of air bubbles in the fuel supply exiting the filter.

The fuel filter is preferably of a type which includes a base which has a fuel inlet and a fuel outlet. A conduit interiorly defines a first axial passage which communicates with the inlet. A second conduit surrounds the first conduit and defines a second axial passage. The second axial passage communicates with the outlet.

The filter cartridge, which is mountable to the base, preferably includes at least one pleated filter element. The filter cartridge has a central axial bore that is dimensioned to receive the conduits. A sealing grommet mounted at the bore upper opening diametrally fluidically seals against the outer conduit. A first conduit disposed in the filter cartridge bore extends upward from a medial plate. A second sealing grommet mounted adjacent the first conduit upper end diametrally seals against the inner base conduit. Fluted baffles angularly disposed on the first cartridge conduit outer surface are in fluid communication with the second base outlet conduit. A vent orifice opens radially through the first cartridge conduit above the second sealing grommet. The orifice is dimensioned and located to limit and control the rate of escape and the size of air bubbles. The baffles define a flow path which tends to separate air bubbles from the fuel and thereby form an upper bubble collection zone within the cartridge since the bubbles tend to resist traversing downwardly around the baffles.

Other objects and advantages of the invention will become apparent from the drawings and the specification.

### Brief Description of the Drawings

Figure 1 is a sectional view of a fuel filter assembly in accordance with one embodiment of the invention;
Figure 2 is a sectional view of the fuel filter cartridge of the filter assembly of Figure 1;
Figure 3 is a fragmentary sectional view of the fuel filter cartridge of Figure 1 taken along the line 3 - 3 thereof;
Figure 4 is a perspective view of the base portion of the fuel filter assembly of Figure 1;
Figure 5 is an enlarged fragmentary sectional view, partly in schematic, of the fuel filter assembly of Figure 1 illustrating the invention for a first fuel level; and
Figure 6 is an enlarged fragmentary sectional view, partly in schematic, of the fuel filter assembly of Figure 1 illustrating the invention for a second fuel level.

### Detailed Description Of The Preferred Embodiments

With reference to the drawings wherein like numerals represent like parts throughout the several figures, a fuel filter assembly in accordance with the present invention is generally designated by the numeral 10. Fuel filter assembly 10 comprises a module or base 12 and a disposable filter cartridge 14. The base 12 is disposed generally above the disposable filter cartridge 14 which is locked to the base by means of a retainer collar 16. The fuel filter assembly is especially adapted for incorporation into the fuel supply system of an internal combustion engine (not illustrated), such as a diesel engine, for removing particulate matter from fuel and separating the water from the fuel. The fuel filter assembly 10 is particularly adapted for incorporation into a fuel supply system which is operated under a vacuum.

The base 12 and the disposable cartridge 14 may assume a wide variety of configurations. For the disclosed embodiment, the base is an inverted cup-like receptacle which forms a skirt defining a lower receiving cavity for upper portions of a disposable cartridge. An elongated sleeve-like conduit 24 and an outer concentric sleeve-like conduit 26 having an axial end 27 provide generally co-axial fluid communication between the base and the disposable cartridge.

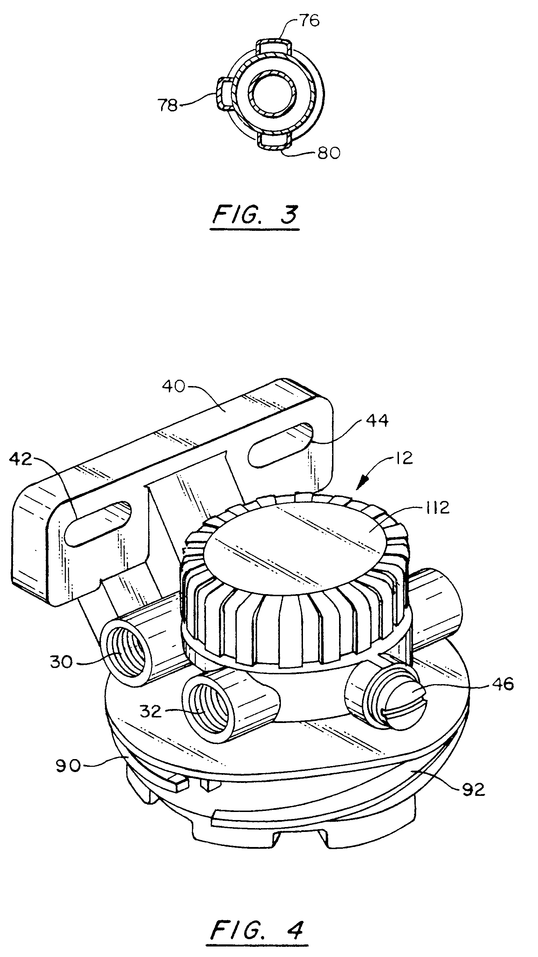

With reference to Figure 4, an inlet connector 30 at an upper side location of the base connects with the fuel line (not illustrated) to ultimately provide fluid communication through the interior passageway defined by the first conduit 24. An outlet connector 32 at an upper side location of the base connects with the fuel line to provide external fluid communication from the axial fluid conduit defined between the first and second conduits 24 and 26.

An integral projecting bracket 40 which may include a pair of openings 42, 44 for anchoring the filter base to the engine header extends transversely from the base. Alternately, the base may not employ the described bracket structure but instead include a pair of fastener openings for receiving mounting fasteners. The base may also have an external air vent 46.

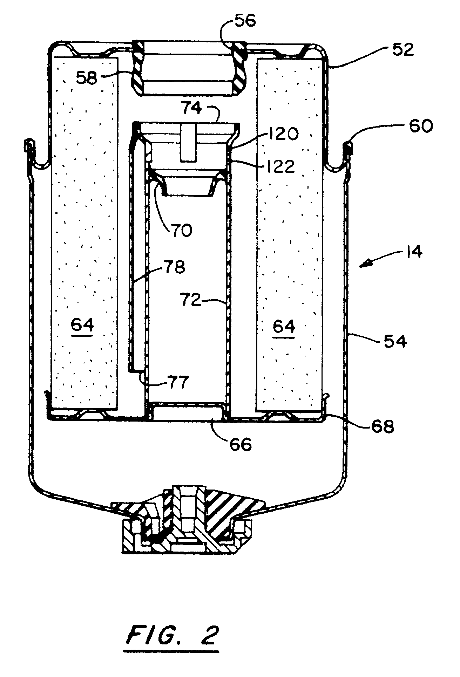

With reference to Figure 2, the disposable filter cartridge 14 comprises a can-like enclosure formed by a pair of opposed lower and upper cup-like sections 52, 54. The sections are joined along a circumferential roll seam 60. The upper section 52, which is smaller in diameter than the lower section, is received by the base receptacle. The upper section 52 is dimensioned to be closely accommodated in the base receptacle. A central axial opening 56 in the upper section is dimensioned to receive the conduits 24 and 26. A sealing grommet 58 mounted at the opening 56 diametrally fluidically seals against the outer conduit 26.

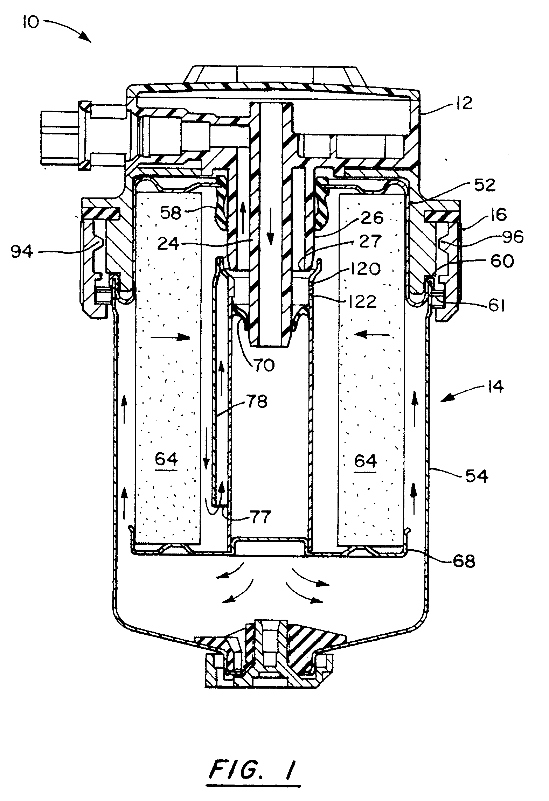

The cartridge may employ a dual stage filter assembly or a single stage assembly as illustrated in Figures 1 and 2. A filter element 64 which has a continuous fan-shaped pleated configuration is mounted in the enclosure. The lower end of the element 64 is engaged by a medial plate 68 having a central opening 66. A tubular conduit 72 extends upward from the medial plate 68. The tubular conduit upper end 74 defines a flange which receives and seals against the lower end of the base second sleeve-like conduit 26. Alternatively, the upper end of the cartridge conduit may diametrally seal at its inside diameter with conduit 26.

A second sealing grommet 70 is mounted inside the tubular conduit 72 intermediate the upper end 74 and the medial plate 68. The second sealing grommet 70 diametrally seals against the base first like conduit 24. At least one axially extending fluted baffle 76 is integrally disposed on the tubular conduit 72 outer surface. The fluted baffle 76 is in fluid communication with the upper portion of the tubular conduit 72 intermediate the second grommet 70 and the upper end 74. The baffles each have an opening 77 at their lower ends and function as axial fluid passageways which ultimately communicate with the outlet conduit 26 of the base. For the illustrated embodiment, three angularly spaced fluted baffles 76, 78 and 80 are employed. The fluted baffles 76, 78 and 80 define a flow path which tends to separate the air bubbles from the fuel flow through the filter. The bubbles resist traversal around the lower end of the baffles through the openings 77. Consequently, a bubble collection zone is created and continuously maintained at the upper portion of the cartridge on the clean side of the filter. The baffles 76, 78 and 80 thus function as barriers to the bubble flow from the filter cartridge.

At least one vent orifice 120 opens radially through the tubular conduit 72 intermediate the second sealing grommet 70 and the upper end 74. The orifice 120 is dimensioned and located to limit the size of air bubbles and to meter the flow of collected air bubbles to the upper end of conduit 72 and to the outlet conduit 26. A second vent orifice 122 which is axially spaced from the first vent orifice 120, i.e., below orifice 120, functions as a metering orifice if orifice 120 becomes plugged. The diameters of orifices 120 and 122 in one embodiment are each approximately 0.015 inches. The base may include a pair of integral outwardly projecting diametrically opposed ramps 90 and 92. The ramps ascend in spiral-like fashion around the base. The upper ends of the ramps are beveled. The collar includes a pair of diametrically disposed spiral followers 94 and 96 which integrally extend inwardly from the collar. The followers 94, 96 are dimensioned and positioned for engagement with the ramps 90, 92 so that the followers slidably engage and ascend the ramps upon alignment and angular rotation of the collar. The foregoing ramp and spring configuration may be substantially identical to that disclosed in co-pending U.S. Patent Application Serial No. 07/746,693 filed on August 16, 1991, which application is assigned to the assignee of the present invention and the disclosure of which is incorporated herein by reference. The collar 16 includes an inwardly projecting annular shoulder 61 which engages the roll seam 60 of the cartridge for releasably locking the cartridge to the base.

The fuel enters the fuel filter assembly through the fuel inlet passage and exits the filter through the outlet passage. The general flow path of the fuel through the filter assembly is generally designated by the Figure 1 arrows. It will be appreciated that the fuel flow path initially axially traverses through the interior of the inner conduit 24. The circulation path extends generally axially upwardly and generally radially through the filter element 64 with the return flow path through the fluted baffles 76, 78 and 80 and traversing between the inner conduit 24 and the outer conduit 26.

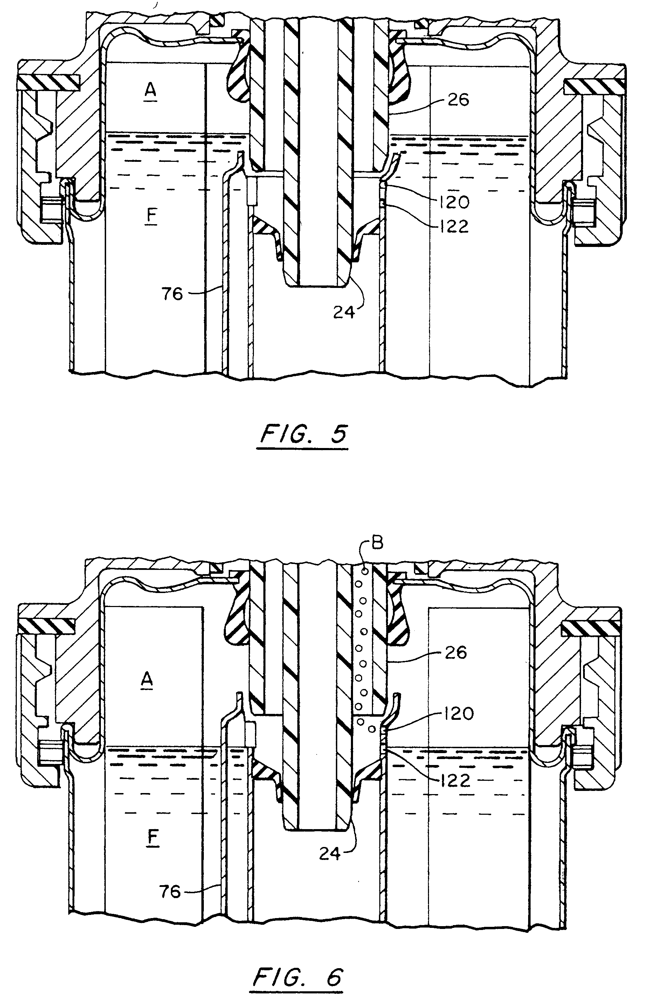

With reference to Figure 5, when the level of fuel F is above the orifice 120, fuel bleeds into the return passageway between conduits 24 and 26. The lower portion of the return passageway is filled with fuel. The orifice allows for a generally continuous bleeding of fuel between the interior chamber formed by the secondary element 64, the upper portion of conduit 72 and the lower end of conduit 26, provided the level of fuel F in the filter is at or above the height of the orifice 120. When the filter is initially filled such as with a hand primer, the fuel level will ordinarily not level off or deadhead within the filter cartridge until the fuel level covers the orifice 120. Therefore, the air space A above the fuel F will be limited by the position and dynamics of the orifice 120.

The orifice 120 functions as a bleed vent to control the formation of air bubbles in the return fuel flow path particularly as the level of the fuel in the filter changes, such as may, for example, result from vehicle movement or cartridge attitude shifts. When the engine is started, a vacuum head draws fuel upwardly through the return passageway between conduits 24 and 26. If the level of fuel descends to a position which at least partially uncovers orifice 120, such as illustrated in Figure 6, air will bleed in a controlled fashion through the orifice 120 into the filtered fuel traversing the return passageway. The intermittent stream of air bubbles B will have no or a negligible effect on the delivery of fuel since the bubbles B will be relatively small in size. The orifice 120 functions to meter the flow of tiny bubbles above the fuel level by providing the air bleed to the return passage. The baffles function as barriers to limit the flow of bubbles to the outlet stream from the clean side of the filter element and to cause the bubbles to collect and be essentially stored at the interior top portion of the cartridge on the clean side of the filter.

## Claims

1. A fuel filter assembly having a base (12), a filter cartridge (14) mountable to the base (12) for filtering fuel, and a retainer (16) for retaining the filter cartridge (14) with the base (12), the base (12) having a fuel inlet (30), a fuel outlet (32), a first conduit (24) for interiorly defining a first axial passage, the first axial passage being in fluid communication with the inlet (30), a second conduit (26) for defining a second axial passage, the second axial passage being in fluid communication with the outlet (32), the filter cartridge (14) having at least one filter element (64), an end portion defining an axial opening (56) for communicating with the base second conduit (26), a first seal (58) for sealing the base second conduit (26) with the cartridge end portion, and defining a fuel path communicating with the base first axial passage, the base second axial passage and traversing the element (64), the filter cartridge (14) further comprising conduit means (72) for defining an axial passage and defining a portion of the fuel path, said conduit means (72) comprising vent (120) means for defining a vent path, characterized in that:
the axial opening (56) receives the base first (24) and second (26) conduits;
the conduit means (72) communicates with the base first conduit (24); and
the filter cartridge further comprises baffle means (76,78,80) comprising at least one axially extending baffle, said baffle means (76,78,80) being in fluid communication with the conduit means (72) wherein said baffle means (76,78,80) defines a portion of the flow path.

2. The fuel filter assembly of claim 1, characterized in that said cartridge conduit means (72) comprises first and second conduit sections, said first conduit section being in fluid communication with said base first axial passage, said second conduit section (76,78,80) being in fluid communication with said base second axial passage.

3. The fuel filter assembly of claims 1 and 2, characterized in that said vent means (120) comprises means defining a vent orifice.

4. The fuel filter assembly of claim 3, characterized by comprising a second vent orifice axially spaced from said first vent orifice.

5. The fuel filter assembly of claim 1, characterized in that said cartridge (14) further comprises a second seal (70) for sealing the base first conduit (24) with said cartridge conduit means (72) when the cartridge (14) is mounted to the base (12), wherein said vent means (120) is disposed between said first (58) and second (70) seal means.

6. The fuel filter assembly of claim 1, characterized in that said second conduit (26) has a lower end (27) and said conduit means (72) has an upper end (74), said conduit means upper end (74) defining a flange, said flange receiving the base second conduit lower end (27) and sealing the base second conduit (26) with said conduit means (72) when the cartridge (14) is mounted to the base (12).

7. The fuel filter assembly of claim 3, characterized in that said orifice (120) has a diameter of approximately 0.015 inches.

8. The fuel filter assembly of claim 1, characterized in that said at least one baffle (76,78,80) has a pair of axially spaced openings and defines an axial passage.

9. A fuel filter cartridge having a housing having a first end defining an axial opening (56), an axially spaced second end, and a seal (58) mounted around the axial opening (56), a filter element (64) disposed in the housing having a first end and an axially spaced second end and defining a central inner region on one side of the element and an outer region on the opposing side of the element, an endcap (68) mounted to the filter element second end, conduit means (72) disposed in the filter element (64) inner region, said conduit means (72) having axially opposite first and second ends, said conduit means (72) being mounted on the endcap (68), and vent means (120) disposed in said conduit means (72) for defining a vent orifice, characterized in that:
the endcap (68) defines a central opening (66);
the seal (58) is mounted in the axial opening (56);
the filter cartridge further comprises sealing means (70) mounted in the conduit means (72) intermediate the first and second (74) ends;
the filter cartridge further comprises baffle means (76,78,80) mounted to said conduit means (72) and define an axial passage, said baffle means (76,78,80) being in fluid communication with the conduit means (72) intermediate the conduit means second end (74) and said sealing means (70); and
the vent means (120) are disposed intermediate the conduit means second end (74) and said sealing means (70).

10. The fuel filter cartridge of claim 9, characterized in that said conduit means second end (74) defines an annular flange.

11. The fuel filter cartridge of claim 9, characterized in that said vent means (120) is adjacent said flange.

12. The fuel filter cartridge of claim 9, characterized in that said orifice (120) has a diameter of approximately 0.015 inches.

13. The fuel filter cartridge of claim 9, characterized in that said baffle means comprises a plurality of angularly spaced axially extending fluted baffles (76,78,80).

14. The fuel filter cartridge of claim 9, characterized by comprising a second vent orifice axially spaced from said first vent orifice (120).

## Patentansprüche

1. Krafstoffilteraufbau mit einem Grundteil (12), einer Filterpatrone (14), die an dem Grundteil (12) zum Filtrieren von Kraftstoff anbringbar ist, und mit einem Halteelement (16) zum Festhalten der Filterpatrone (14) am Grundteil (12), wobei der Grundteil (12) einen Kraftstoffeinlaß (30), einen Kraftstoffauslaß (32), eine erste Leitung (24), um innen einen ersten axialen Durchlaß zu bilden, wobei der erste axiale Durchlaß in Fluidverbindung mit dem Einlaß (30) steht, eine zweite Leitung (26) aufweist, um einen zweiten axialen Durchlaß zu bilden, wobei der zweite axiale Durchlaß in Fluidverbindung mit dem Auslaß (32) steht, wobei die Filterpatrone (14) wenigstens ein Filterelement (64), einen Endteil, der eine axiale Öffnung (56) für Verbindung mit der zweiten Leitung (26) des Grundteils bildet, eine erste Dichtung (58) zum Abdichten der zweiten Leitung (26) des Grundteils gegen den Endteil der Patrone aufweist und die einen Kraftstoffweg begrenzt, der mit dem ersten axialen Durchlaß des Grundteils, dem zweiten zweiten axialen Durchlaß des Grundteils in Verbindung steht und durch das Element (64) hindurchgeht, wobei die Filterpatrone weiter Leitungsmittel (72) zum Bilden eines axialen Durchlasses und zum Bilden eines Teils des Kraftstoffweges aufweist, wobei die Leitungsmittel (72) Entlüftungsmittel (120) zum Bilden eines Entlüftungsweges aufweisen, dadurch gekennzeichnet, daß
die axiale Öffnung (56) die ersten (24) und zweiten (26) Leitungen des Grundteils aufnimmt;
die Leitungsmittel (72) mit der ersten Leitung (24) des Grundteils in Verbindung stehen; und
die Filterpatrone weiter Leitflächenmittel (76, 78, 80) aufweist, die wenigstens eine sich axial erstreckende Leitfläche aufweisen, welche Leitflächenmittel (76, 78, 80) in Fluidverbindung mit den Leitungsmitteln (72) stehen, wobei die Leitflächenmittel (76, 78, 80) einen Teil des Strömungsweges begrenzen.

2. Kraftstoffilteraufbau nach Anspruch 1, dadurch gekennzeichnet, daß die Patronenleitungsmittel (72) erste und zweite Leitungsabschnitte aufweisen, wobei der erste Leitungsabschnitt in Fluidverbindung mit dem ersten axialen Durchlaß des Grundteils steht, wobei der zweite Leitungsabschnitt (76, 78, 80) in Fluidverbindung mit dem zweiten axialen Durchlaß des Grundteils steht.

3. Kraftstoffilteraufbau nach den Ansprüchen 1 und 2, dadurch gekennzeichnet, daß die Entlüftungsmittel (120) Mittel aufweisen, die eine Entlüftungsöffnung begrenzen.

4. Kraftstoffilteraufbau nach Anspruch 3, dadurch gekennzeichnet, daß er eine zweite Entlüftungsöffnung aufweist, die axial von der ersten Entlüftungsöffnung beabstandet ist.

5. Kraftstoffilteraufbau nach Anspruch 1, dadurch gekennzeichnet, daß die Patrone (14) weiter eine zweite Dichtung (70) zum Abdichten der ersten Leitung (24) des Grundteils gegen die Patronenleitungsmittel (72) aufweist, wenn die Patrone (14) am Grundteil (12) angebracht ist, wobei die Entlüftungsmittel (120) zwischen den ersten (58) und zweiten (70) Dichtungsmitteln angeordnet sind.

6. Kraftstoffilteraufbau nach Anspruch 1, dadurch gekennzeichnet, daß die zweite Leitung (26) ein unteres Ende (27) aufweist und die Leitungsmittel (72) ein oberes Ende (74) aufweisen, wobei das obere Ende (74) der Leitungsmittel einen Flansch bildet, welcher Flansch das untere Ende (27) der zweiten Leitung des Grundteils aufnimmt und die zweite Leitung (26) des Grundteils gegen die Leitungsmittel (72) abdichtet, wenn die Patrone (14) am Grundteil (12) angebracht ist.

7. Kraftstoffilteraufbau nach Anspruch 3, dadurch gekennzeichnet, daß die Öffnung (120) einen Durchmesser von ungefähr 0,015 Zoll (0,38 mm) hat.

8. Kraftstoffilteraufbau nach Anspruch 1, dadurch gekennzeichnet, daß die wenigstens eine Leitfläche (76, 78, 80) ein Paar von axial beabstandeten Öffnungen aufweist und einen axialen Durchlaß begrenzt.

9. Kraftstoffilterpatrone mit einem Gehäuse, das ein erstes Ende, das eine axiale Öffnung (56) begrenzt, ein axial beabstandetes zweites Ende und eine Dichtung (58) aufweist, das um die axiale Öffnung (56) angebracht ist, mit einem Filterelement (64), das in dem Gehäuse angeordnet ist und ein erstes Ende und ein axial beabstandetes zweites Ende aufweist und einen mittigen inneren Bereich auf einer Seite des Elementes und einen äußeren Bereich auf der gegenüberliegenden Seite des Elementes begrenzt, mit einer Endkappe (68), das am zweiten Ende des Filterelementes angebracht ist, mit Leitungsmitteln (72), die am inneren Bereich des Filterelementes (64) angebracht sind, wobei die Leitungsmittel (72) axial gegenüberliegende erste und zweite Enden aufweisen, welche Leitungsmittel (72) an der Endkappe (68) angebracht sind, und mit Entlüftungsmitteln (120), die in den Leitungsmitteln (72) zum Begrenzen einer Entlüftungsöffnung angeordnet sind, dadurch gekennzeichnet, daß
die Endkappe (68) eine mittige Öffnung (66) begrenzt;
die Dichtung (58) in der axialen Öffnung (56) angebracht ist;
die Filterpatrone weiter Dichtmittel (70) aufweist, die in den Leitungsmitteln (72) zwischen den ersten und zweiten (74) Enden angebracht sind;
die Filterpatrone weiter Leitflächenmittel (76, 78, 80) aufweist, die an den Leitungsmitteln (72) angebracht sind und einen axialen Durchlaß begrenzen, welche Leitflächenmittel (76) in Fluidverbindung mit den Leitungsmitteln (72) zwischen dem zweiten Ende (74) der Leitungsmittel und den Dichtmitteln (70) stehen; und
die Entlüftungsmittel (120) zwischen dem zweiten Ende (74) der Leitungsmittel und den Dichtmitteln (70) angeordnet sind.

10. Kraftstoffilterpatrone nach Anspruch 9, dadurch gekennzeichnet, daß das zweite Ende (74) der Leitungsmittel einen ringförmigen Flansch begrenzt.

11. Kraftstoffilterpatrone nach Anspruch 9, dadurch gekennzeichnet, daß die Entlüftungsmittel (120) dem Flansch benachbart sind.

12. Kraftstoffilterpatrone nach Anspruch 9, dadurch gekennzeichnet, daß die Öffnung (120) einen Durchmesser von ungefähr 0,015 Zoll (0,38 mm) hat.

13. Kraftstoffilterpatrone nach Anspruch 9, dadurch gekennzeichnet, daß die Leitflächenmittel eine Vielzahl von winkelmäßig beabstandeten, axial sich erstreckenden ausgekehlten, genuteten oder geriffelten Leitflächen (76, 78, 80) aufweisen.

14. Kraftstoffilterpatrone nach Anspruch 9, dadurch gekennzeichnet, daß sie eine zweite Entlüftungsöffnung aufweist, die axial von der ersten Entlüftungsöffnung (120) beabstandet ist.

## Revendications

1. Sous-ensemble de filtre à combustible possédant un support (12), une cartouche filtrante (14) pouvant être montée sur le support (12) pour filtrer le combustible, et une pièce de maintien (16) pour maintenir la cartouche filtrante (14) avec le support (12), le support (12) possédant un orifice d'admission de combustible (30), un orifice de refoulement de combustible (32), un premier conduit (24) pour définir intérieurement un premier passage axial, le premier passage axial étant en communication fluide avec l'orifice d'admission (30), un deuxième conduit (26) pour définir un deuxième passage axial, le deuxième passage axial étant en communication fluide avec l'orifice de refoulement (32), la cartouche filtrante (14) ayant au moins un élément filtrant (64), une portion d'extrémité définissant une ouverture axiale (56) pour communiquer avec le deuxième conduit (26) du support, un premier joint d'étanchéité (58) pour assurer l'étanchéité du deuxième conduit (26) du support vis-à-vis de la portion d'extrémité de la cartouche, et pour définir une voie de combustible communiquant avec le premier passage axial du support et le deuxième passage du support et traversant l'élément (64), la cartouche filtrante (14) comprenant en outre un moyen de conduit (72) pour définir un passage axial et pour définir une portion du chemin du combustible, ledit moyen de conduit (72) comprenant un moyen d'évent (120) pour définir un chemin de dégazage, caractérisé en ce que :
l'ouverture axiale (56) reçoit le premier (24) et le deuxième (26) conduits du support ;
le moyen de conduit (72) communique avec le premier conduit (24) du support ; et
la cartouche filtrante comprend en outre des moyens déflecteurs (76, 78, 80) comprenant au moins un déflecteur s'étendant dans la direction axiale, lesdits moyens déflecteurs (76, 78, 80) étant en communication fluide avec le moyen de conduit (72) dans lequel lesdits moyens déflecteurs (76, 78, 80) définissent une portion du chemin d'écoulement.

2. Sous-ensemble de filtre à combustible selon la revendication 1, caractérisé en ce que ledit moyen de conduit de cartouche (72) comprend un premier et un deuxième tronçons de conduit, ledit premier tronçon de conduit étant en communication fluide avec ledit premier passage axial du support, ledit deuxième troncon de conduit (76, 78, 80) étant en communication fluide avec ledit deuxième passage axial du support.

3. Sous-ensemble de filtre à combustible selon les revendications 1 et 2, caractérisé en ce que ledit moyen d'évent (120) comprend un moyen qui définit un orifice de dégazage.

4. Sous-ensemble de filtre à combustible selon la revendication 3, caractérisé en ce qu'il comprend un deuxième orifice de dégazage disposé à une certaine distance axiale dudit premier orifice de dégazage.

5. Sous-ensemble de filtre à combustible selon la revendication 1, caractérisé en ce que ladite cartouche (14) comprend en outre un deuxième joint d'étanchéité (70) pour assurer l'étanchéité du premier conduit (24) du support vis-à-vis dudit moyen de conduit de cartouche (72), quand la cartouche (14) est montée sur le support (12), où ledit moyen d'évent (120) est disposé entre ledit premier (58) et ledit deuxième (70) moyens d'étanchéité.

6. Sous-ensemble de filtre à combustible selon la revendication 1, caractérisé en ce que ledit deuxième conduit (26) a une extrémité inférieure (27) et ledit moyen de conduit (72) a une extrémité supérieure (74), ladite extrémité supérieure (74) du moyen de conduit définissant une bride, ladite bride recevant l'extrémité inférieure (27) du deuxième conduit du support et assurant l'étanchéité du deuxième conduit (26) du support vis-à-vis dudit moyen de conduit (72) quand la cartouche (14) est montée sur le support (12).

7. Sous-ensemble de filtre à combustible selon la revendication 3, caractérisé en ce que ledit orifice (120) a un diamètre d'environ 0,38 mm (0,015 inches).

8. Sous-ensemble de filtre à combustible selon la revendication 1, caractérisé en ce que ledit au moins un déflecteur (76, 78, 80) possède une paire d'ouvertures, disposées à une certaine distance axiale l'une de l'autre, et définit un passage axial.

9. Cartouche de filtre à combustible possédant une enveloppe qui comporte une première extrémité définissant une ouverture axiale (56), une deuxième extrémité disposée à une certaine distance axiale de la première, et un joint d'étanchéité (58) monté autour de l'ouverture axiale (56), un élément filtrant (64) disposé dans l'enveloppe, ayant une première extrémité et une deuxième extrémité disposée à une certaine distance axiale de la première et définissant une région intérieure centrale sur un côté de l'élément et une région extérieure sur le côté opposé de l'élément, un bouchon (68) monté sur la deuxième extrémité de l'élément filtrant, un moyen de conduit (72) disposé dans la région intérieure de l'élément filtrant (64), ledit moyen de conduit (72) ayant une première et une deuxième extrémités opposées dans la direction axiale, ledit moyen de conduit (72) étant monté sur le couvercle (68), et un moyen d'évent (120) disposé dans ledit moyen de conduit (72) pour définir un orifice de dégazage, caractérisée en ce que :
le couvercle (68) définit une ouverture centrale (66) ;
le joint d'étanchéité (58) est monté dans l'ouverture axiale (56) ;
la cartouche filtrante comprend en outre un moyen d'étanchéité (70) monté dans le moyen de conduit (72) entre la première et la deuxième (74) extrémités ;
la cartouche filtrante comprend en outre des moyens déflecteurs (76, 78, 80) montés sur ledit moyen de conduit (72) et définit un passage axial, lesdits moyens déflecteurs (76, 78, 80) étant en communication fluide avec le moyen de conduit (72) entre la deuxième extrémité (74) du moyen de conduit et ledit moyen d'étanchéité (70) ; et
le moyen d'évent (120) est disposé entre la deuxième extrémité (74) du moyen de conduit et ledit moyen d'étanchéité (70).

10. Cartouche de filtre à combustible selon la revendication 9, caractérisée en ce que ladite deuxième extrémité (74) du moyen de conduit définit une bride annulaire.

11. Cartouche de filtre à combustible selon la revendication 9, caractérisée en ce que ledit moyen d'évent (120) se trouve au voisinage immédiat de la bride.

12. Cartouche de filtre à combustible selon la revendication 9, caractérisée en ce que ledit orifice (120) a un diamètre d'environ 0,38 mm (0,015 inches).

13. Cartouche de filtre à combustible selon la revendication 9, caractérisée en ce que lesdits moyens déflecteurs comprennent plusieurs déflecteurs profilés à face concave (76, 78, 80) s'étendant dans la direction axiale et faisant un angle entre eux.

14. Cartouche de filtre à combustible selon la revendication 9, caractérisée en ce qu'elle comprend un deuxième orifice de dégazage, disposé à une certaine distance axiale du premier orifice de dégazage (120).
